# EUROPÄISCHE PATENTSCHRIFT

(11) **EP 1 897 793 B1**
(45) Veröffentlichungstag und Bekanntmachung des Hinweises auf die Patenterteilung: **08.07.2009**
(21) Anmeldenummer: 07016224.3
(22) Anmeldetag: 18.08.2007
(51) Int. Cl.: B62K 11/04, B62J 31/00

(54) **Motorradrahmen**
Motorcycle frame
Cadre de moto

(30) Priorität: 11.09.2006 DE 102006042559
(43) Veröffentlichungstag der Anmeldung: 12.03.2008
(73) Patentinhaber: KTM Sportmotorcycle AG, 5230 Mattighofen (AT)
(72) Erfinder: Prielinger, Robert, 4655 Vorchdorf (AT); Seger, Olaf, 83410 Laufen (DE); Wimmer, Andreas, 5274 Burgkirchen (AT)
(74) Vertreter: Söllner, Udo

(56) Entgegenhaltungen:
- WO-A-20/05111395
- JP-A- 2 274 677
- JP-A- 60 169 387
- US-A- 5 480 001
- US-A1- 2005 006 163

## Beschreibung

Die vorliegende Erfindung betrifft einen Motorradrahmen mit sich von einem Steuerkopfrohr weg erstreckenden, in einem räumlichen Gitterverbund angeordneten Rohren mit Rahmenhauptrohren und diese verbindenden Rahmenstreben, wobei obere und untere Rahmenhauptrohre paarweise entlang wenigstens eines Teilbereichs ihrer Längsstreckung weitgehend parallel zueinander verlaufen. Die Erfindung betrifft darüber hinaus ein Motorrad mit einem Vorderrad und einem Hinterrad sowie einer Motorgetriebeeinheit.

Ein Motorradrahmen muss zwei grundlegende Aufgaben erfüllen, nämlich zum einen das Gewicht von Fahrer, Beifahrer, Motor und Getriebe und anderer Anbauteile aufnehmen und zum anderen mit weiteren Bauteilen des Fahrwerks dafür sorgen, dass das Motorrad über ein gutes Handling verfügt. Unter dem Begriff des Handlings wird dabei das Fahrverhalten des Motorrads verstanden, wie es vom Fahrer empfunden wird und dabei wesentlich von der Steifigkeit des Rahmens beeinflusst wird. So können Änderungen der Steifigkeit des Motorradrahmens das Fahrverhalten des Motorrads insgesamt genau so stark ändern, wie beispielsweise eine deutliche Veränderung der Leistung des Antriebsmotors des Motorrads oder des Gewichts des Motorrads.

Die Steifigkeit des Motorradrahmens zeigt sich für den Fahrer immer dann, wenn auf den Motorradrahmen ein Torsionsmoment einwirkt. Dieses Torsionsmoment versucht den Rahmen in sich zu verdrehen, also eine Verdrehung herbeizuführen zwischen einem Steuerkopfrohr oder Lenkkopflagerrohr des Motorradrahmens und einer Schwingenlagerung des Motorradrahmens, also dem Ort des Motorradrahmens, an dem die für die Radführung des Hinterrads zuständige Schwinge Kräfte in den Motorradrahmen einleitet.

Ein solches, auf den Motorradrahmen wirkendes Torsionsmoment tritt beispielsweise dann auf, wenn das Motorrad eine Kurve durchfährt und der Fahrer das Motorrad gleichzeitig verzögert. Diese Verzögerung wird üblicherweise durch die Betätigung der Vorderradbremse des Motorrads herbeigeführt, so dass es zu einer deutlichen Veränderung der Radlastverteilung des Motorrads verglichen mit einer stationären Fahrt auf ebener Fahrbahn kommt. Hat der Fahrer mit seinem Motorrad die Kurve umfahren, so verändert sich die Radlastverteilung wieder, da der Fahrer am Kurvenausgang das Motorrad beschleunigt und die Radlast sich zum größten Teil auf das Hinterrad hin verlagert. Das Motorrad befindet sich dabei noch in Schräglage und aufgrund der zunehmenden Geschwindigkeit neigt sich der Fahrer weiter in Richtung zur Kurveninnenseite hin und gleichzeitig verschiebt sich die Radlast weiter in Richtung zum Hinterrad hin. Zeichnet sich der Motorradrahmen nun durch vergleichsweise geringe Steifigkeiten aus, so führt dies zu elastischen Verformungen des Rahmens, worunter die Dynamik der Fahrbewegung leidet.

Diese elastischen Verformungen nämlich muss der Fahrer durch eine Veränderung seines Fahrverhaltens kompensieren, also beispielsweise die eingeschlagene Fahrlinie verändern, die Leistungsabgabe des Motors verringern, seine Sitzposition relativ zur Hochachse des Motorrads verändern und dergleichen mehr. Alle diese Vorgänge führen letztlich zu zeitlichen Verzögerungen der Fahrt des Motorrads verglichen mit einem Motorrad mit einem Motorradrahmen mit höherer Steifigkeit, worunter die Dynamik der Fahrbewegung leidet. Auch in subjektiver Weise führt die geringere Steifigkeit des Motorradrahmens zu einem für den Fahrer wahrnehmbaren Nachteil, denn das Motorrad fühlt sich schwammig und auf das vom Fahrer gewünschte Fahrverhalten nur indirekt und mit Verzögerung reagierend an.

Ein Motorradrahmen mit einer niedrigen Torsionssteifigkeit erfährt daher bei einer Belastung mit einem vorbestimmten Torsionsmoment betragsmäßig höhere elastische Formänderungen als ein Motorradrahmen mit höherer Torsionssteifigkeit. Dies ist insbesondere bei für dynamisches Fahrverhalten konzipierten Motorrädern von Bedeutung, bei denen es beispielsweise zu im normalen Fahrbetrieb häufigen Veränderungen der Radlastverteilung und Kurvenfahrten kommt. Eine Erhöhung der Torsionssteifigkeit des Motorradrahmens kann nun durch eine Vergrößerung der Abmessungen einzelner Segmente, wie beispielsweise Rahmenhauptrohren oder Rahmenstreben des Motorradrahmens erfolgen, dies ist aber unter dem Gesichtspunkt der Zunahme der Masse des Motorradrahmens kontraproduktiv.

Motorradrahmen sind bereits in vielen Ausführungsformen bekannt geworden. So sind bereits Einschleifenrahmen bekannt geworden, bei denen sich ein Rohr vom Steuerkopfrohr ausgehend um den Motor herum erstreckt und sich im Bereich der Schwingenlagerung teilt. Auch sind bereits Brückenrahmen bekannt geworden, die seitlich um den Verbrennungsmotor herum verlaufen. Bei einem weiteren bekannten Rahmenprinzip, dem sogenannten Doppelschleifenrahmen, verlaufen zwei Rohre vom Steuerkopfrohr ausgehend um den Verbrennungsmotor herum bis zur Schwingenlagerung und dann zum Steuerkopfrohr zurück. Diese zurücklaufenden Rohre werden üblicherweise auch als Unterzüge bezeichnet. Daneben sind auch bereits Blechprofilrahmen bekannt geworden, die aus zwei zusammengeschweißten Pressstahlhälften bestehen. Weitere bekannte Bauarten sind sogenannte Monocoquerahmen, die beim Motorradbau aber wenig Verbreitung finden und schließlich sind auch noch sogenannte Gitterrohrrahmen bekannt geworden, die einen räumlichen Gitterverbund aus Rahmenrohren besitzen, die untereinander mit Rahmenstreben verbunden sind.

Bei einem solchen Gitterrohrrahmen handelt es sich um einen einem Fachwerk ähnlich aufgebauten Rahmen, bei dem der Motor als integraler Bestandteil zur Erhöhung der Rahmensteifigkeit beitragen kann und damit als mittragendes Bauteil ausgebildet ist. Ebenfalls sind bereits sogenannte Zentralrohrrahmen bekannt geworden, die ein oberhalb des Motors vom Steuerkopfrohr bis in den Bereich der Schwingenlagerung verlaufendes zentrales Rohr besitzen, welches gleichzeitig zur Aufnahme von Betriebsstoffen des Motorrads verwendet werden kann, beispielsweise als Öltank.

Document WO 2005 111 395 A2 offenbart einen Motorrradrahmen gemäß dem Oberbegriff des Anspruchs 1.

Ein Brückenrahmen mit integriertem Motorölreservoir ist beispielsweise anhand der DE 101 35 931 C2 bekannt geworden.

Ein Gitterrohrrahmen, wie er vorstehend beschrieben worden ist, ist beispielsweise anhand der JP-08216960 A bekannt geworden. Dieser Gitterrohrrahmen besitzt ein Steuerkopfrohr, von dem sich jeweils paarweise obere und untere Rahmenhauptrohre weg erstrecken und zwar so, dass sich in Richtung der Längserstreckung der Rahmenhauptrohre ein Öffnungswinkel zwischen den beiden Rahmenhauptrohren von größer als 90 Grad einstellt. Die Rahmenhauptrohre sind dabei über Rahmenstreben miteinander verbunden.

Anhand der JP-09095284 A ist ein Gitterrohrrahmen mit einem Steuerkopfrohr bekannt geworden, von dem jeweils obere und untere Rahmenhauptrohre weglaufen und die oberen und unteren Rahmenhauptrohre mittels Rahmenstreben miteinander verbunden sind.

Anhand der JP-01106789 A ist ein Zentralrohrrahmen bekannt geworden, dessen Zentralrohr einen rechteckigen Querschnitt besitzt und sich von einem Steuerkopfrohr weg erstreckt und seitliche Dreieckslenker besitzt, an denen der Motor des Motorrads befestigt werden kann.

Schließlich ist anhand der US 5,845,728 A eine Rahmenstruktur für ein Motorrad bekannt geworden mit einem sich vom Steuerkopfrohr bis zu einer Schwingenlagerung erstreckenden gekrümmten Zentralrohr, wobei sich von einem Dreiecksverbund zwischen dem Steuerkopfrohr dieses Rahmens seitliche Lenker weg erstrecken, an denen der Motor befestigt werden kann.

Ein weiterer Motorradrahmen ist auf die Anmelderin zurückgehend bekannt geworden. Dieser bekannte Motorradrahmen besitzt ein Steuerkopfrohr, von dem sich in einem räumlichen Gitterverbund Rohre in der Form von Rahmenhauptrohren und diese verbindenden Rahmenstreben weg erstrecken. Bei den Rahmenhauptrohren handelt es sich um obere und untere Rahmenhauptrohre, die entlang eines Teilbereichs ihrer Längserstreckung vom Steuerkopfrohr weg weitgehend parallel zueinander verlaufen. Dieser bekannte Motorradrahmen hat sich in der Praxis bereits bestens bewährt. Der Einsatzbereich des mit dem bekannten Motorradrahmen ausgestatteten Motorrads ist dabei einerseits als Reise-Enduro die Straße, andererseits auch das Offroadfahren.

Dieser bekannte Motorradrahmen besitzt bereits eine hohe Torsionssteifigkeit bei niedrigem Gewicht, zeichnet sich aber aufgrund seines Konzepts als Gitterrohrrahmen durch eine Vielzahl von Rohren aus, die bei der Fertigung mittels einer Schweißverbindung miteinander verbunden werden müssen, was zu einer aufwendigen Fertigung führt.

Ausgehend hiervon liegt der vorliegenden Erfindung nunmehr die Aufgabe zugrunde, den bekannten Motorradrahmen derart weiterzubilden, dass er trotz einer Verringerung der Gesamtzahl von zum Gitterverbund verbundenen Rohren nochmals erhöhte Festigkeitswerte besitzt, ohne die Masse des Motorradrahmens dabei zu erhöhen. Darüber hinaus soll auch ein mit dem zu schaffenden Motorradrahmen ausgestattetes Motorrad geschaffen werden.

Die Erfindung weist nunmehr hinsichtlich des Motorradrahmens die im Anspruch 1 angegebenen Merkmale auf. Vorteilhafte Ausgestaltungen hiervon sind in den weiteren Ansprüchen beschrieben. Darüber hinaus weist die Erfindung hinsichtlich des zu schaffenden Motorrads die im Anspruch 19 angegebenen Merkmale auf, wobei eine vorteilhafte Ausgestaltung hiervon in dem weiteren Anspruch beschrieben ist.

Die Erfindung sieht nun einen Motorradrahmen vor mit sich von einem Steuerkopfrohr weg erstreckenden, in einem räumlichen Gitterverbund angeordneten Rohren mit Rahmenhauptrohren und diese verbindenden Rahmenstreben, wobei untere und obere Rahmenhauptrohre paarweise entlang wenigstens eines Teilbereichs ihrer Längserstreckung weitgehend parallel zueinander verlaufen, wobei zwischen den oberen Rahmenhauptrohren und dem Steuerkopfrohr ein einzelnes, weitgehend parallel zu den unteren Rahmenhauptrohren verlaufendes Rohr angeordnet ist.

Der nach der Erfindung vorgesehene Motorradrahmen weist also zwischen den beiden, sich vom Steuerkopfrohr weg gerichtet erstreckenden oberen Rahmenhauptrohren ein einzelnes Rohr auf, das an dem Steuerkopfrohr beispielsweise mittels einer Schweißverbindung befestigt ist und an dem sich vom Steuerkopfrohr weg gerichtet erstreckenden Bereich, der der Endbereich des einzelnen Rohrs sein kann, die oberen Rahmenhauptrohre beispielsweise mittels einer Schweißverbindung festgelegt sind. Der erfindungsgemäße Motorradrahmen weist auch zwei untere Rahmenhauptrohre auf, die sich vom Steuerkopfrohr weg gerichtet erstrecken und zumindest entlang eines Teilbereichs ihrer Längserstreckung vom Steuerkopfrohr weg weitgehend parallel zu den oberen Rahmenhauptrohren verlaufen.

Das die oberen Rahmenhauptrohre mit dem Steuerkopfrohr zur Kraft- und Momenteneinleitung verbindende einzelne Rohr verläuft ebenfalls weitgehend parallel zu den unteren Rahmenhauptrohren und schafft verglichen mit dem vorstehend beschriebenen bekannten Gitterrohrrahmen einen nochmals torsionssteiferen Motorradrahmen bei sogar noch geringfügig reduzierter Masse und einer geringeren Anzahl an Rohren, die zum erfindungsgemäßen Motorradrahmen zu verbinden sind.

So hat es sich gezeigt, dass der erfindungsgemäße Motorradrahmen verglichen mit dem beschriebenen bekannten Gitterrohrrahmen bei geringfügig reduzierter Masse des Rahmens eine um mehr als 30 % höhere Steifigkeit aufweist und zudem aufgrund der geringeren Anzahl von Rohren - der erfindungsgemäße Motorradrahmen besitzt 16 Rohre, während der bekannte Motorradrahmen 22 Rohre aufweist - kürzere Fertigungszeiten ermöglicht und aufgrund der geringeren Anzahl von Schweißverbindungen zwischen den einzelnen Rohren auch die Problematik eines thermischen Verzugs aufgrund der Schweißverbindungen verringert.

Nach einer Weiterbildung der Erfindung ist es vorgesehen, dass das einzelne Rohr an einem dem Steuerkopfrohr gegenüberliegenden Endbereich offen ausgebildet ist und zur Aufnahme einer Einrichtung zur Abscheidung von Öl aus einem Ölgasgemisch aus einer Motorgetriebeeinheit eines mit dem erfindungsgemäßen Motorradrahmen versehenen Motorrads ausgebildet ist. Aufgrund von Umweltschutzbestimmungen ist es erforderlich, das sich beispielsweise im Kurbelgehäuse des Antriebsmotors des Motorrads bildende Ölgasgemisch zu trennen und das abgeschiedene Öl dem Antriebsmotor, bei dem es sich auch um eine aus Motor und Getriebe gebildete Einheit handeln kann, wieder zuzuführen, während das nach Abscheiden des Öls verbliebene Gas der Verbrennung durch den Antriebsmotor des Motorrads in der Form der Brennkraftmaschine zugeführt wird.

Der erfindungsgemäße Motorradrahmen schafft nun hier neben der Verbesserung der Torsionssteifigkeit auch noch eine Funktionsintegration, da in den Innenraum des Steuerkopfrohr und obere Rahmenhauptrohre verbindenden einzelnen Rohrs eine Ölabscheideeinrichtung eingebracht werden kann, die der Trennung von Öl und Gas des Ölgasgemisches dient. Der Innenraum des Rohrs kann hierzu form- und flächenkomplementär zu der Einrichtung ausgebildet sein, so dass die Einrichtung in dem Rohr mittels eines einfachen Klemmsitzes lösbar festgelegt sein kann. Die vormontierte Ölabscheideeinrichtung kann sodann durch den offenen Endbereich des einzelnen Rohrs einfach in das Rohr eingeschoben und dort mittels eines Klemmsitzes lösbar festgelegt werden. Über beispielsweise Formschläuche kann dann eine Motorentlüftung fluidleitend mit der Ölabscheideeinrichtung verbunden werden, die über weitere Formschlauchverbindungen mit einem Luftfilterkasten oder einer Airbox des Antriebsmotors des Motorrads verbunden ist und mittels eines weiteren beispielsweise zu nennenden Formschlauches mit einer Öffnung am Motor oder dem Getriebe, über die in der Ölabscheideeinrichtung abgeschiedenes Motoröl in den Ölkreislauf des Antriebsmotors oder der Motorgetriebeeinheit zurückgeführt wird.

Nach einer Weiterbildung der Erfindung ist es vorgesehen, dass eine Längsmittelachse des Rohrs mit einer Längsmittelachse des Steuerkopfrohrs einen Winkel von weitgehend 90 Grad einschließt, was fertigungstechnisch von Vorteil ist, da hierdurch die Bildung einer aufwendigen dreidimensionalen Anbindungsfläche des einzelnen Rohrs am Steuerkopfrohr vermieden werden kann und somit der Fertigungsaufwand und damit die Fertigungskosten verringert werden können.

In ähnlicher Weise ist es vorgesehen, dass sich die unteren Rahmenhauptrohre in einem Dreiecksverbund mit zwischen den Rahmenhauptrohren angeordnetem Versteifungsblech von dem Steuerkopfrohr weg erstrecken und eine vom Dreiecksverbund aufgespannte Ebene die Längsmittelachse des Steuerkopfrohrs in einem Winkel von weitgehend 90 Grad schneidet. Auch hierdurch wird ein fertigungstechnischer Vorteil erreicht, da durch den Wegfall einer komplizierten dreidimensionalen Anbindungsfläche der unteren Rahmenhauptrohre in ihrem Verbindungsbereich mit dem Steuerkopfrohr die Fertigung vereinfacht werden kann und das zwischen den Rahmenhauptrohren angeordnete Versteifungsblech die Biegesteifigkeit des erfindungsgemäßen Motorradrahmens erhöht.

Das einzelne Rohr ist im Bereich des oberen Endes des Steuerkopfrohrs mit diesem beispielsweise mittels einer Schweißverbindung verbunden. Der erfindungsgemäße Rahmen zeichnet sich nun nach einer Weiterbildung dadurch aus, dass Rahmenstreben sich von den unteren Rahmenhauptrohren in Richtung der Anbindungsstelle des Rohrs am Steuerkopfrohr erstrecken, wodurch zwischen dem Steuerkopfrohr und den jeweiligen unteren Rahmenrohren sowie den Rahmenstreben ein Dreiecksverbund geschaffen wird, der die Biegesteifigkeit des erfindungsgemäßen Motorradrahmens erhöht.

Nach einer Weiterbildung der Erfindung ist es vorgesehen, dass die unteren Rahmenhauptrohre entlang ihrer Längserstreckung vom Steuerkopfrohr weg einen einen Öffnungswinkel zwischen den unteren Rahmenhauptrohren verkleinernden ersten Verengungsbereich besitzen, ab dem die unteren Rahmenhauptrohre mit in Längsrichtung größer werdendem Abstand zwischen den unteren Rahmenhauptrohren in Richtung vom Steuerkopfrohr weg bis zu einem zweiten Verengungsbereich verlaufen, ab dem der Abstand zwischen den unteren Rahmenhauptrohren in Längsrichtung vom Steuerkopfrohr weg wieder kleiner wird. Wie es vorstehend bereits erwähnt wurde, erstrecken sich die unteren Rahmenhauptrohre von ihrer Anbindungsstelle an dem Steuerkopfrohr weg in einem zur Längsmittelachse des Steuerkopfrohres liegenden Winkel von weitgehend 90 Grad und besitzen einen Öffnungswinkel, der dazu führt, dass der lichte Abstand zwischen den unteren Rahmenhauptrohren vom Steuerkopfrohr ausgehend in Längsrichtung der unteren Rahmenhauptrohre schnell größer wird, so dass ein Aufnahmeraum zwischen den unteren Rahmenhauptrohren beispielsweise für einen Zylinderkopf einer Brennkraftmaschine geschaffen wird.

Die Rahmenhauptrohre verlaufen dabei in Längsrichtung vom Steuerkopfrohr weg bis zu einem ersten Verengungsbereich ab dem der lichte Abstand zwischen den Rahmenhauptrohren zwar noch größer wird, aber mit einer in Längsrichtung der unteren Rahmenhauptrohre betrachtet kleineren Steigerungsrate als im Bereich vor dem ersten Verengungsbereich. Vom Steuerkopfrohr aus betrachtet in Längsrichtung des Rahmens wird dann ab einem zweiten Verengungsbereich der Abstand zwischen den unteren Rahmenhauptrohren in Längsrichtung vom Steuerkopfrohr weg wieder kleiner, so dass der erfindungsgemäße Rahmen eine breiteste Stelle im Bereich des zweiten Verengungsbereichs besitzt und sowohl zum Steuerkopfrohr hin, als auch vom Steuerkopfrohr weg betrachtet ab diesem zweiten Verengungsbereich schmäler wird.

Nach einer Weiterbildung der Erfindung besitzt der Motorradrahmen auch Rahmenstreben, die sich zwischen den unteren Rahmenhauptrohren im Bereich des ersten Verengungsbereichs und dem dem Steuerkopfrohr gegenüberliegenden Bereich des Rohrs erstrecken, so dass sich in Längsrichtung des Rahmens betrachtet eine dreieckförmige Konfiguration zwischen den unteren Rahmenhauptrohren und dem oberen einzelnen Rohr einstellt und damit eine torsionssteife Konfiguration.

Nach einer vorteilhaften Weiterbildung der Erfindung ist es vorgesehen, dass sich von den unteren Rahmenhauptrohren in Richtung vom Rohr weg und in Richtung zu einer die Längsmittelachse des Steuerkopfrohrs einschließenden Längsmittelebene des Motorradrahmens Rahmenstreben erstrecken, die beispielsweise zur Befestigung des Antriebsmotors des Motorrads dienen können. Dabei kann es sich bei diesen Motorhaltestreben um einzelne, an den unteren Rahmenhauptrohren beispielsweise mittels einer Schweißverbindung festgelegte Einzelrohre handeln oder auch um einen vorgefertigten Dreiecksverband mit einer Zugstrebe, an der der Motor festgelegt werden kann und die sich in zwei zu den jeweiligen unteren Rahmenhauptrohren erstreckende Motorhaltestreben aufteilt.

Nach einer Weiterbildung der Erfindung ist es vorgesehen, dass sich die oberen Rahmenhauptrohre von dem dem Steuerkopfrohr gegenüberliegenden Endbereich des Rohrs in Richtung vom Rohr weg gerichtet und parallel zu den unteren Rahmenhauptrohren erstrecken und ab einem Bereich einer jeweiligen oberen Abstützung für einen Heckausleger in Richtung zu den unteren Rahmenhauptrohren nach unten gerichtet verlaufen.

An dem erfindungsgemäßen Motorradrahmen kann ein Heckausleger lösbar festgelegt werden, beispielsweise mittels Schraubenverbindungen, der zur Aufnahme weiterer Bauteile eines mit dem erfindungsgemäßen Motorradrahmen ausgestatteten Motorrads in der Form beispielsweise eines hinteren Kotflügels oder dergleichen vorgesehen ist. Die oberen Rahmenhauptrohre laufen nun von dem dem Steuerkopfrohr gegenüberliegenden Endbereich des Rohrs in Richtung von dem einzelnen Rohr weg gerichtet und parallel zu den unteren Rahmenhauptrohren und erstrecken sich dann ab dem Bereich der jeweiligen oberen Abstützung für den Heckausleger an den oberen Rahmenhauptrohren in Richtung zu den unteren Rahmenhauptrohren, um dann im Bereich einer jeweiligen unteren Abstützung für den Heckausleger eine Verbindungsstelle mit den unteren Rahmenhauptrohren auszubilden.

Der bereits angesprochene Heckausleger kann dann an den oberen und unteren Abstützungen festgelegt werden und der erfindungsgemäße Motorradrahmen bildet damit beidseits der das Steuerkopfrohr einschließenden Längsmittelebene des Rahmens zwischen dem oberen Rahmenhauptrohr und unteren Rahmenhauptrohr zu beiden Seiten ein Dreieck aus, das vom jeweiligen oberen Rahmenhauptrohr, dem jeweiligen unteren Rahmenhauptrohr und einer weiteren Rahmenstrebe gebildet wird, die das Dreieck zwischen den oberen und unteren Rahmenhauptrohren schließt und entlang ihrer Längserstreckung eine Aufnahme für die Lagerung einer Hinterradschwinge des Motorrads bildet.

Es ist dabei nach einer Weiterbildung der Erfindung vorgesehen, dass die oberen und unteren Rahmenhauptrohre jeweils mittels der soeben angesprochenen Rahmenstrebe verbunden sind, die sich von einer jeweiligen oberen Abstützung für den Heckausleger am jeweiligen oberen Rahmenhauptrohr im schrägen Winkel nach unten gerichtet über das jeweilige untere Rahmenhauptrohr hinaus erstreckt und im Bereich ihrer Längserstreckung die Aufnahme für ein Lager einer Hinterradführung des Motorrads besitzt, also beispielsweise für die bereits angesprochene Hinterradschwinge.

Die soeben angesprochenen Rahmenstreben können am der oberen Abstützung gegenüberliegenden Endbereich mittels eines Querrohrs verbunden sein, an dem eine Aufnahme für eine Motorgetriebeeinheit des Motorrads anbringbar ist. Auch können an diesen Rahmenstreben im Bereich ihres der oberen Abstützung des Heckauslegers gegenüberliegenden Endes Fußrasten angebracht werden, an denen sich der Fahrer des Motorrads abstützt.

Nach einer Weiterbildung der Erfindung ist es vorgesehen, dass sich zwischen dem Querrohr und den oberen Rahmenhauptrohren im Bereich der unteren Abstützung für den Heckausleger jeweils eine Rahmenstrebe angeordnet befindet, die als Zugstrebe ausgebildet ist.

Darüber hinaus ist es nach einer Weiterbildung der Erfindung auch vorgesehen, dass sich Rahmenstreben von den unteren Rahmenhauptrohren zu den oberen Rahmenhauptrohren im Bereich deren Anbindungsstelle am Rohr erstrecken. Die Rahmenstreben dienen der weiteren Versteifung des erfindungsgemäßen Motorradrahmens und dienen beispielsweise dazu, eine über die Schwingenlagerung der Hinterradschwinge in den Motorradrahmen eingebrachte Torsionsbelastung in der Form von Zugkräften beziehungsweise Druckkräften je nach Torsionsrichtung zwischen den unteren und oberen Rahmenhauptrohren abzustützen.

In ähnlicher Weise ist es nach einer Weiterbildung der Erfindung vorgesehen, dass sich Rahmenstreben von den unteren Rahmenhauptrohren zu den im schrägen Winkel verlaufenden Rahmenstreben im Bereich deren Anbindungsstelle an den oberen Rahmenhauptrohren erstrecken und somit Zugkräfte beziehungsweise Druckkräfte zwischen den unteren Rahmenhauptrohren und den im schrägen Winkel nach unten und die Schwingenlageraufnahme darstellende Rahmenstreben übertragen.

Bei dem das Steuerkopfrohr mit den oberen Rahmenhauptrohren verbindenden einzelnen Rohr kann es sich nach einer Ausführungsform um ein querschnittlich kreisförmiges Rohr handeln. Nach einer bevorzugten Ausführungsform ist es aber vorgesehen, dass das Rohr im Querschnitt eine polygonale Konfiguration besitzt, insbesondere eine Innenumfangsfläche mit acht Einzelflächen aufweist. In den Innenraum dieses im Querschnitt polygonal konfigurierten Rohrs wird dann die vorstehend bereits erwähnte Ölabscheideeinrichtung eingebracht. Bekannte, im räumlichen Gitterverbund angeordnete, Motorradrahmen weisen mit dem Steuerkopfrohr direkt verbundene obere Rahmenhauptrohre auf, die vom Steuerkopfrohr ausgehend in Längsrichtung des Motorradrahmens betrachtet einen lichten Abstand aufweisen, der dem lichten Abstand zwischen den unteren Rahmenhauptrohren entspricht. Ein solcher bekannter Motorradrahmen wurde eingangs unter Bezugnahmen auf beispielsweise JP-08216960 A oder JP-09095284 A beschrieben.

Wird nun ein solcher bekannter Motorradrahmen an einem Motorrad verbaut, welches zu sportlichen Zwecken im Mischbetrieb zwischen Fahren auf befestigtem, asphaltierten Straßen und Fahren in befestigtem oder unbefestigtem Gelände mit Sprüngen eingesetzt wird, bei dem es häufig zu schnellen Richtungsänderungen und zu Fahrmanövern kommt, bei denen sich das Hinterrad des Motorrads im Drift befindet, so sind die genannten bekannten Motorradrahmen hier ungeeignet und von Nachteil. Bei einem solchen mit ausgesprochen dynamischen Fahrbewegungen betriebenen Motorrad handelt es sich beispielsweise um ein als Supermoto oder Supermotard bezeichnetes Motorrad, bei dem der Fahrer des Motorrads zwar auch stationär auf der Sitzbank sitzt, bei vielen Fahrbewegungen oder Manövern aber seine Sitzposition relativ zu einem Kraftstofftank des Motorrads ständig verändert.

Wird nun ein solches Motorrad mit einem in Fahrtrichtung vor dem auf der Sitzbank sitzenden Fahrer breit bauenden bekannten Rahmen gebildet, wie er vorstehend erläutert worden ist, so führt dies dazu, dass ein in Fahrtrichtung zwischen dem Steuerkopfrohr und der Sitzbank für den Fahrer angeordneter Kraftstofftank entweder zwischen den oberen und unteren Rahmenhauptrohren angebracht werden muss, wie dies beispielsweise bei einem Motorrad der Fall ist, wie es in der JP-09095284 A beschrieben worden ist oder der Kraftstofftank muss mit seinen seitlichen Wangen die oberen Rahmenhauptrohre noch seitlich übergreifen. Befindet sich der Kraftstofftank zwischen den oberen und unteren Rahmenhauptrohren angebracht, so kommt der Fahrer des Motorrads mit den Innenseiten seiner Oberschenkel ständig mit den oberen Rahmenhauptrohren in Kontakt und er vermisst so den für das dynamische Fahren und für die Rückmeldung vom Motorrad gewünschten Knieschluss zwischen dem Kraftstofftank und der Innenseite der Oberschenkel beziehungsweise der Knie des Fahrers. Eine solche Konfiguration würde dazu führen, dass es dem Fahrer erheblich an Rückmeldung vom Motorrad fehlt. Übergreift der Kraftstofftank mit seinen seitlichen Wangen noch die oberen Rahmenhauptrohre, so wird eine ausgesprochen breite Konfiguration des Kraftstofftanks notwendig, die ebenfalls den gewünschten Knieschluss zum Kraftstofftank zwischen Fahrer und Tank unmöglich macht.

Auch hier schafft nun der erfindungsgemäße Motorradrahmen Abhilfe, da die Ausbildung des Rahmens mit einem einzelnen Rohr zwischen dem Steuerkopfrohr und den beiden oberen Rahmenhauptrohren es ermöglicht, einen schmal bauenden Satteltank am Motorradrahmen zu befestigen, der einen engen Knieschluss des Fahrers mit dem Satteltank ermöglicht und so für eine gute Rückmeldung sorgt und darüber hinaus es auch ermöglicht, den Kraftstofftank in Längsrichtung des Motorradrahmens betrachtet insgesamt schmal auszubilden, ohne das Tankvolumen zu beschneiden, da der so angeordnete Kraftstofftank das einzelne Rohr zwischen Steuerkopfrohr und oberen Rahmenhauptrohren in einer an der Unterseite des Kraftstofftanks ausgebildeten Ausnehmung übergreifen kann und somit einschließt.

Nach einer Weiterbildung der Erfindung schließlich ist der Motorradrahmen frei von eine Motorgetriebeeinheit vollständig einschließenden Rahmenhauptrohren und/oder Rahmenstreben. Damit besitzt der erfindungsgemäße Motorradrahmen keine Rahmenunterzüge, die den Motor oder eine Motorgetriebeeinheit des damit ausgestatteten Motorrads vollständig umschließen.

Die Erfindung schafft darüber hinaus auch ein Motorrad mit einem Vorderrad und einem Hinterrad sowie einer Motorgetriebeeinheit, das mit einem Motorradrahmen ausgestattet ist, wie er vorstehend ausführlich erläutert worden ist. Das nach der Erfindung vorgesehene Motorrad kann einen zwischen dem Steuerkopfrohr des Motorradrahmens und einer am Motorradrahmen abgestützten Sitzfläche angeordneten Kraftstofftank aufweisen, wie er vorstehend bereits erläutert worden ist, dessen Unterseite eine Ausnehmung besitzt, die das sich vom Steuerkopfrohr weg erstreckende und mit den oberen Rahmenhauptrohren verbundene einzelne Rohr zumindest weitgehend einschließt. Damit wird eine in Fahrtrichtung des Motorrads betrachtet ausgesprochen schmale Konfiguration des Kraftstofftanks ermöglicht, die dem Fahrer des Motorrads einen engen Knieschluss zum Kraftstofftank ermöglicht und der Tank trotzdem ein Kraftstofftankvolumen von beispielsweise zwölf Litern bereitstellt.

Dieses nach der Erfindung vorgesehene Motorrad erlaubt ausgesprochen fahrdynamische Fahrmanöver, wie sie beispielsweise im Supermotobereich vorkommen, da sich das mit dem erfindungsgemäßen Motorradrahmen ausgestattete Motorrad verwindungssteif verhält und den Fahrer des Motorrads dadurch entlastet, dass er das Abklingen elastischer Verformungsvorgänge des Motorradrahmens nicht durch zeitliche Verzögerungen abwarten muss oder solchen elastischen Verformungen durch beispielsweise Verlagerungsbewegungen des Körpers am Motorrad entgegenwirken muss.

Die Erfindung wird nun im Folgenden anhand der Zeichnung näher erläutert. Diese zeigt in:
Fig. 1 eine Seitenansicht auf eine Ausführungsform des erfindungsgemäßen Motorradrahmens;
Fig. 2 eine Draufsichtansicht auf den Motorradrahmen;
Fig. 3 eine perspektivische Darstellung des Motorradrahmens;
Fig. 4 eine Schnittdarstellung einer Einrichtung zur Ölabscheidung, die in einem Rohr des Motorradrahmens angeordnet werden kann;
Fig. 5 eine Querschnittsansicht eines am Motorradrahmen angeordneten Kraftstofftanks; und
Fig. 6 eine Seitenansicht eines Motorrads mit dem erfindungsgemäßen Motorradrahmen.

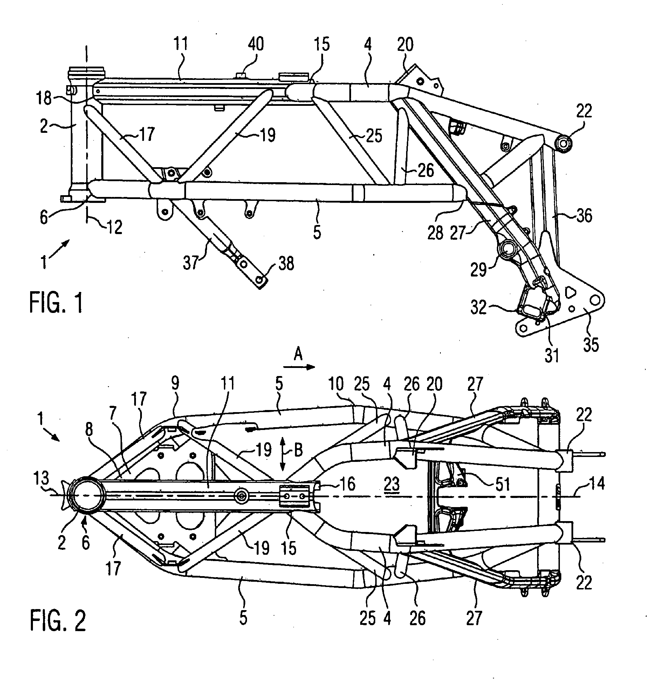

Nachfolgend wird unter Bezugnahme auf Fig. 1, Fig. 2 und Fig. 3 der erfindungsgemäße Motorradrahmen anhand des dargestellten Ausführungsbeispiels erläutert.

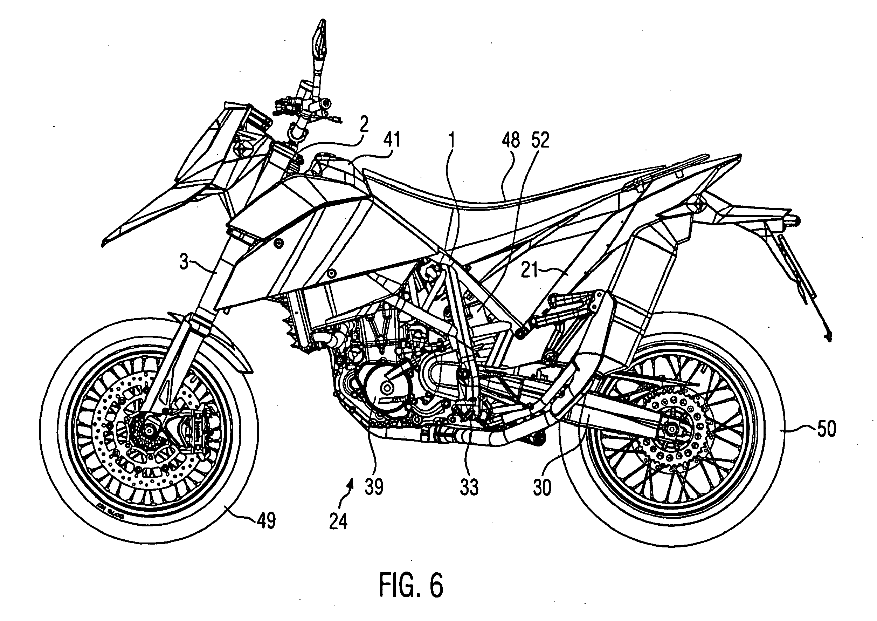

Der Motorradrahmen 1 besitzt ein Steuerkopfrohr 2, welches der Aufnahme von nicht näher dargestellten Steuerkopflagern in der Form von Wälzlagern dient, mit denen eine näher anhand von Fig. 6 ersichtliche Teleskopgabel 3 drehbar gelagert ist.

Der Motorradrahmen 1 - im Folgenden auch Rahmen 1 genannt - besitzt zwei obere Rahmenhauptrohre 4 sowie zwei untere Rahmenhauptrohre 5.

Die unteren Rahmenhauptrohre 5 erstrecken sich dabei vom Steuerkopfrohr 2 in Längsrichtung des Rahmens 1 betrachtet von ihrer Verbindungsstelle mit oder Anbindungsstelle am Steuerkopfrohr 2 direkt vom Steuerkopfrohr 2 weg. Die Verbindung der unteren Rahmenhauptrohre 5 mit dem Steuerkopfrohr 2 kann dabei über eine Schweißverbindung erfolgen und zwar derart, dass die Rahmenhauptrohre 5 am Steuerkopfrohr 2 seitlich mittels umlaufender Schweißnähte festgelegt werden. Die Konfiguration kann dabei derart gewählt sein, dass das Steuerkopfrohr 2 und die beiden Rahmenhauptrohre 5 im Bereich ihrer Verbindungsstelle 6 einen Dreiecksverbund ausbilden, in den sich ein Versteifungsblech 7 einfügt.

Die unteren Rahmenhauptrohre 5 erstrecken sich dabei vom Steuerkopfrohr 2 weg mit einem zwischen den beiden unteren Rahmenhauptrohren 5 ausgebildeten Öffnungswinkel 8 bis in den Bereich eines ersten Verengungsbereichs 9. Vom Steuerkopfrohr 2 ausgehend nimmt der lichte Abstand zwischen den beiden unteren Rahmenhauptrohren 5 in Längsrichtung des Rahmens 1 gemäß dem Pfeil A bis zum ersten Verengungsbereich 9 stetig zu. Vom ersten Verengungsbereich 9 aus betrachtet in Richtung des Pfeiles A nimmt der lichte Abstand in Richtung des Doppelpfeiles B zwischen den beiden unteren Rahmenhauptrohren 5 weiter zu, nicht mehr aber mit der gleichen Zuwachsrate in Längsrichtung des Rahmens 1 betrachtet, wie dies zwischen dem Steuerkopfrohr 2 und dem ersten Verengungsbereich 9 der Fall ist. Ausgehend vom ersten Verengungsbereich 9 erstrecken sich die unteren Rahmenhauptrohre 5 in Längsrichtung des Rahmens 1 gemäß dem Pfeil A geradlinig weiter bis zu einem zweiten Verengungsbereich 10, ab dem in Richtung des Pfeils A betrachtet der lichte Abstand zwischen den beiden unteren Rahmenhauptrohren 5 in Richtung des Doppelpfeils B wieder kleiner wird.

Im Bereich des oberen Endes des Steuerkopfrohrs 2 ist ein einzelnes Rohr 11 vorgesehen, welches das Steuerkopfrohr 2 mit den beiden oberen Rahmenhauptrohren 4 verbindet. Die Anordnung des einzelnen Rohres 11 am Steuerkopfrohr 2 kann dabei ebenfalls mittels einer Schweißverbindung geschehen, und zwar derart, dass eine Längsmittelachse des Rohres 11 mit einer Längsmittelachse 12 des Steuerkopfrohrs 2 einen Winkel von 90 Grad einschließt, wie dies anhand von Fig. 1 der Zeichnung ersichtlich ist.

Fig. 2 der Zeichnung zeigt, dass sich das Rohr 11 vom Steuerkopfrohr 2 in Richtung des Pfeils A, also in Längsrichtung des Rahmens 1 vom Steuerkopfrohr 2 weg erstreckt derart, dass sich die Längsmittelachse 13 des Rohrs 11 mit einer Längsmittelebene 14 des Rahmens 1 deckt, das Rohr 11 also in Längsrichtung des Rahmens 1 betrachtet in der Mitte des Rahmens 1 verläuft. Die oberen Rahmenhauptrohre 4 und die unteren Rahmenhauptrohre 5 erstrecken sich dabei entlang eines Teilbereichs ihrer Längserstreckung parallel zueinander, wie dies anhand der Seitenansicht gemäß Fig. 1 der Zeichnung ersichtlich ist.

Die Verbindungsstelle oder Anbindungsstelle zwischen den beiden oberen Rahmenhauptrohren 4 und dem sich vom Steuerkopfrohr 2 weg erstreckenden einzelnen Rohr 11 liegt dabei in Richtung des Pfeils A betrachtet im Bereich eines offenen Endbereichs 16 des Rohrs 11. Zwischen dem Steuerkopfrohr 2 und den beiden unteren Rahmenhauptrohren 5 verlaufen Rahmenstreben 17, die sich vom Bereich des ersten Verengungsbereichs 9 bis in den Bereich einer Verbindungsstelle oder Anbindungsstelle 18 des einzelnen Rohrs 11 am Steuerkopfrohr 2 erstrecken. Die Rahmenstreben 17, das Steuerkopfrohr 2 und die unteren Rahmenhauptrohre 5 bilden in diesem Bereich einen Dreiecksverbund aus.

Ein ähnlicher Dreiecksverbund wird auch zwischen Rahmenstreben 19, den beiden unteren Rahmenhauptrohren 5 und dem Versteifungsblech 7 ausgebildet, wobei sich hierzu Rahmenstreben 19 vom Bereich des ersten Verengungsbereichs 9 der unteren Rahmenhauptrohre 5 bis zum Rohr 11 erstrecken und zwar bis etwa der Verbindungsstelle 15 zwischen dem Rohr 11 und den beiden oberen Rahmenhauptrohren 4.

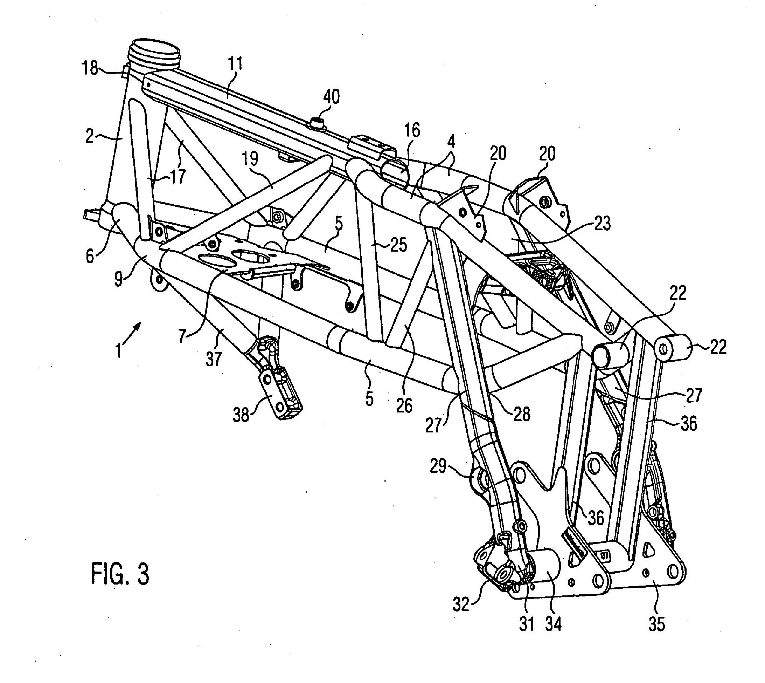

Die oberen Rahmenhauptrohre 4 verlaufen dabei in Längsrichtung A des Motorradrahmens 1 betrachtet von der Anbindungsstelle 15 weg parallel zu den beiden unteren Rahmenhauptrohren 5 bis in den Bereich einer oberen Abstützung 20 für einen Heckausleger 21 (Fig. 6), an dem weitere Bauteile des Motorrads, wie beispielsweise ein hinterer Kotflügel oder dergleichen festgelegt werden können. Wie Fig. 1 und Fig. 3 der Zeichnung ohne weiteres zeigen, verlaufen die beiden oberen Rahmenhauptrohre 4 etwa ab dem Bereich der oberen Abstützung 20 in Richtung nach unten, auf die unteren Rahmenhauptrohre 5 zu und bilden am endseitigen Bereich der oberen Rahmenhauptrohre 4 jeweils untere Abstützungen 22 für den Heckausleger 21 aus.

Fig. 2 und Fig. 3 der Zeichnung zeigen deutlich, dass die beiden oberen Rahmenhauptrohre 4 im Bereich ihrer Längsstreckung zwischen der Anbindungsstelle 15 am Rohr 11 und den beiden unteren Abstützungen 22 für den Heckausleger 21 einen Aufnahmeraum 23 für einen Luftfilterkasten beziehungsweise eine Airbox des mit dem erfindungsgemäßen Motorradrahmen 1 ausgestatteten Motorrads 24 bilden.

Zwischen den beiden unteren Rahmenhauptrohren 5 und den beiden oberen Rahmenhauptrohren 4 verlaufen jeweils Rahmenstreben 25 im schrägen Winkel jeweils zu den oberen Rahmenhauptrohren 4 und den unteren Rahmenhauptrohren 5. In ähnlicher Weise verlaufen Rahmenstreben 26 zwischen den unteren Rahmenhauptrohren 5 und sich von den oberen Rahmenhauptrohren 4 weg erstreckenden weiteren Rahmenstreben 27. Diese Rahmenstreben 27 verbinden dabei, wie es in Fig. 1 bis 3 der Zeichnung ersichtlich ist, die oberen Rahmenhauptstreben 4 mit den unteren Rahmenhauptstreben 5 und erstrecken sich über eine Verbindungsstelle 28 zwischen den unteren Rahmenhauptrohren 5 und den oberen Rahmenstreben 27 in Hochachsrichtung des Rahmens 1 in Richtung nach unten gerichtet weiter bis zu einer Aufnahme 29 für ein Lager einer Hinterradführung in der Form der in Fig. 6 der Zeichnung ersichtlichen Schwinge 30. Die Aufnahme 29 wird von einem nicht näher dargestellten Bolzen durchsetzt, der zur drehbaren Festlegung der Schwinge 30 dient und gleichzeitig eine Tragfunktion der Motorgetriebeeinheit 39 übernimmt.

Die Rahmenstrebe 27 besitzt an ihrem Endbereich 31 eine Aufnahme 32 für Fußrasten 33, wie es in Fig. 6 der Zeichnung ersichtlich ist. Die seitlichen Rahmenstreben 27 sind im Querschnitt elliptisch ausgeführt. Dies führt einerseits zu einer in Längsrichtung des Rahmens 1 schmalen Konfiguration und erhöht andererseits die Längssteifigkeit des gesamten Rahmens 1. Das Bezugszeichen 51 bezeichnet eine obere Aufnahme für ein in Fig. 6 ersichtliches Federdämpferelement 52, wobei die Aufnahme 51 als Schmiedebauteil ausgebildet sein kann und mit den oberen Rahmenhauptrohren 4 sowie den seitlichen Rahmenstreben 27 verbunden ist und gleichzeitig die Seitensteifigkeit oder Quersteifigkeit des Rahmens 1 erhöht.

Darüber hinaus sind die beiden Rahmenstreben 27 in ihrem Endbereich mittels eines Querrohrs 34 miteinander verbunden, an dem Aufnahmen 35 für einen Antriebsmotor des Motorrads 24 oder eine Motorgetriebeeinheit 39 des Motorrads 24 angebracht werden kann. Auch erstrecken sich Rahmenstreben 36 in der Form von Zugstreben zwischen den beiden Endbereichen mit den unteren Abstützungen 22 für den Heckausleger 21 und dem Querrohr 34.

Wie es insbesondere Fig. 1 und Fig. 3 der Zeichnung zeigt, erstrecken sich weitere Rahmenstreben oder Motorstreben 37 von den beiden unteren Rahmenhauptrohren 5 in Hochachsrichtung des Rahmens 1 betrachtet in Richtung nach unten und zwar vom ersten Verengungsbereich 9 ausgehend, um mittels eines Verbindungsträgers 38 den Antriebsmotor beziehungsweise die Motorgetriebeeinheit 39 des Motorrads 24 festlegen zu können. Die Motorgetriebeeinheit 39 wird dann über den Verbindungsträger 38, die Aufnahme 29 für die Hinterradschwinge 30 und die Aufnahme 35 getragen und zwar derart, dass die Motorgetriebeeinheit 39 bei aus der Fahrdynamik des Motorrads 24 stammenden Belastungen nur auf Zug belastet wird.

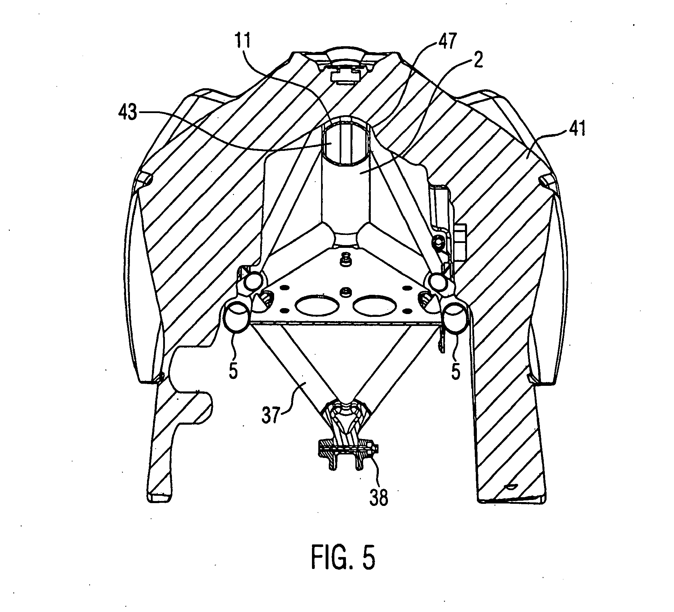

Über einen am einzelnen Rohr 11 an der Oberseite angeordneten Befestigungspunkt 40 kann ein näher anhand von Fig. 6 ersichtlicher Kraftstofftank 41 am Motorrad 24 festgelegt werden und zwar in einer näher anhand von Fig. 5 der Zeichnung ersichtlichen Weise.

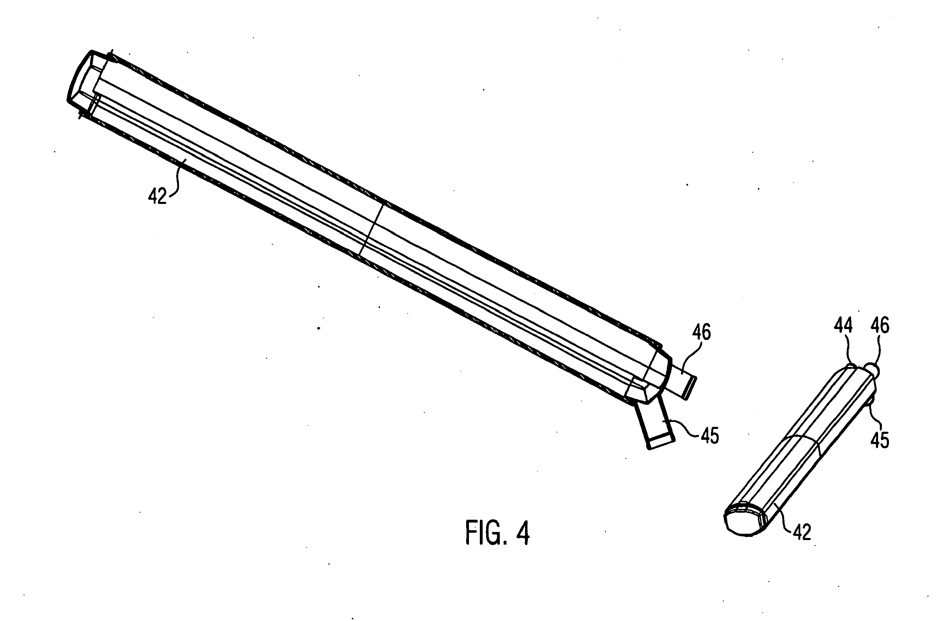

Fig. 4 der Zeichnung zeigt eine Einrichtung 42 zur Ölabscheidung aus einem Ölgasgemisch der Motorgetriebeeinheit 39. Wie es ohne weiteres anhand der perspektivischen Darstellung der Ölabscheideeinrichtung 42 in Fig. 4 der Zeichnung ersichtlich ist, ist diese form- und flächenkomplementär zu einem Innenraum 43 des einzelnen Rohres 11 ausgebildet und kann in den Innenraum 43 vom offenen Endbereich 16 her in das Rohr 11 eingeschoben werden und dort mittels eines Klemmsitzes festgelegt werden. Ein aus einer Öffnung der Motorgetriebeeinheit 39 des Motorrads 24 stammendes Ölgasgemisch tritt über einen Einlass 44 in die Ölabscheideeinrichtung 42 ein und wird dort separiert, das heißt, die leichten gasförmigen Bestandteile von den schwereren Ölpartikeln getrennt. Nach der Abscheidung des Öls kann das Öl über einen Auslass 45 und einen nicht näher dargestellten Formschlauch wieder der Motorgetriebeeinheit 39, beispielsweise über einen am Getriebe ausgebildeten Einlass zugeführt werden. Die leichten gasförmigen Bestandteile werden über einen Auslass 46 und einen nicht näher dargestellten Formschlauch der Airbox zugeführt, die im Aufnahmeraum 23 zwischen den beiden oberen Rahmenhauptrohren 4 angeordnet ist und sodann der Verbrennung durch den Motor der Motorgetriebeeinheit 39 zugeführt.

Fig. 5 der Zeichnung nun zeigt eine Schnittdarstellung des am erfindungsgemäßen Motorradrahmen 1 angeordneten Kraftstofftanks 41. Wie es ohne weiteres ersichtlich ist, besitzt der Kraftstofftank 41 an seiner Unterseite eine Ausnehmung 47, die das mittig angeordnete einzelne Rohr 11 weitgehend vollständig umschließt. Würde verglichen hiermit der Kraftstofftank 41 an einem bekannten Gitterrohrrahmen angebracht werden, wie er eingangs geschildert worden ist, so müsste die Ausnehmung 47 von den unteren Rahmenhauptrohren 5 in Richtung der Hochachsrichtung des Motorrads betrachtet bis zu den oberen Rahmenhauptrohren 4 des bekannten Gitterrohrrahmens verlaufen, wodurch eine großflächige rechteckförmige Ausnehmung geschaffen werden würde, die das zur Verfügung stehende Tankvolumen des Kraftstofftanks 41 deutlich reduzieren würde. Infolge dessen müsste der Kraftstofftank 41 zur Beibehaltung eines entsprechenden Tankvolumens in Hochachsrichtung des Motorrads 24 betrachtet deutlich breiter bauen und würde somit einem engen Knieschluss des auf einer Sitzbank 48 des Motorrads 24 sitzenden Fahrer mit dem Tank 41 entgegenwirken.

Fig. 6 der Zeichnung zeigt schließlich ein mit dem erfindungsgemäßen Motorradrahmen 1 ausgestattetes Motorrad 24 mit einem Vorderrad 49 sowie einem Hinterrad 50 und der bereits angesprochenen Motorgetriebeeinheit 39. Das Motorrad 24 besitzt einen zwischen dem Steuerkopfrohr 2 und einer am Motorradrahmen 1 abgestützten Sitzbank 48 angeordneten Kraftstofftank 41, dessen Unterseite die vorstehend bereits erwähnte Ausnehmung 47 besitzt, die das sich vom Steuerkopfrohr 2 weg erstreckende und mit den oberen Rahmenhauptrohren 4 verbundene einzelne Rohr 11 zumindest weitgehend einschließt. Damit kann aufgrund der Konfiguration des Motorradrahmens 1 mit einem vom Steuerkopfrohr 2 ausgehenden einzelnen Rohr, an das sich die beiden oberen Rahmenhauptrohre 4 anschließen, ein schmal bauender Kraftstofftank 41 im Bereich zwischen der Sitzbank 48 und dem Steuerkopfrohr 2 an dem einen räumlichen Gitterverbund aufweisenden erfindungsgemäßen Motorradrahmen angeordnet werden.

Der erfindungsgemäße Motorradrahmen zeichnet sich nun durch eine hohe Torsionssteifigkeit aus, die verglichen mit dem auf die Anmelderin zurückgehenden und eingangs beschriebenen bekannten Motorradrahmen um 36 Prozent gesteigert werden konnte auf einen Torsionssteifigkeitswert von nahezu 3.000 Newtonmeter pro Grad, obwohl die Masse des erfindungsgemäßen Motorradrahmens verglichen mit dem bekannten Motorradrahmen noch geringfügig reduziert werden konnte. Auch besitzt der erfindungsgemäße Motorradrahmen den Vorteil einer kostengünstigen Fertigung, da die zur Schaffung des Motorradrahmens benötigte Zahl von Einzelrohren verglichen mit dem bekannten Motorradrahmen verringert werden konnte und zudem besitzt der erfindungsgemäße Motorradrahmen noch den Vorteil der Funktionsintegration durch die Aufnahme der Ölabscheideeinrichtung in den Innenraum des einzelnen Rohrs vom Steuerkopfrohr zu den beiden oberen Rahmenhauptrohren hin und schafft die Möglichkeit der Anordnung eines schmalen Kraftstofftanks an dem eine räumliche Gitterverbundstruktur aufweisenden erfindungsgemäßen Motorradrahmen. Aufgrund seiner hohen Torsionssteifigkeit besitzt ein mit dem erfindungsgemäßen Motorradrahmen ausgestattetes Motorrad ein ausgesprochen dynamisches Fahrverhalten, was insbesondere bei sportlichen Einsatzzwecken im Bereich von Supermoto-Wettbewerben von wesentlichem Vorteil ist, da der Fahrer des so ausgestatteten Motorrads bei seinen dynamisch vorgenommenen Richtungsänderungen nicht durch langsam abklingende elastische Formänderungen des Motorradrahmens beeinflusst wird, wie dies bei bekannten Rahmenkonzepten der Fall ist. Aufgrund der verringerten Zahl an Einzelrohren zur Bildung des erfindungsgemäßen Motorradrahmens wird auch die Fertigungszeit verringert, da die Zahl der erforderlichen Schweißverbindungen zwischen den einzelnen Rohren reduziert wurde und letztlich ergibt sich daraus auch der Vorteil, dass aufgrund der verringerten Zahl an Schweißverbindungen auch die Gefahr des Schweißverzugs verringert wird.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Motorradrahmen, Rahmen
- 2: Steuerkopfrohr
- 3: Teleskopgabel
- 4: Obere Rahmenhauptrohre
- 5: Untere Rahmenhauptrohre
- 6: Verbindungsstelle, Anbindungsstelle
- 7: Versteifungsblech
- 8: Öffnungswinkel
- 9: Erster Verengungsbereich
- 10: Zweiter Verengungsbereich
- 11: Einzelnes Rohr
- 12: Längsmittelachse
- 13: Längsmittelachse
- 14: Längsmittelebene
- 15: Verbindungsstelle, Anbindungsstelle
- 16: Offener Endbereich
- 17: Rahmenstreben
- 18: Verbindungsstelle, Anbindungsstelle
- 19: Rahmenstreben
- 20: Obere Abstützung
- 21: Heckausleger
- 22: Untere Abstützung
- 23: Aufnahmeraum
- 24: Motorrad
- 25: Rahmenstreben
- 26: Rahmenstreben
- 27: Rahmenstreben
- 28: Verbindungsstelle
- 29: Aufnahme
- 30: Hinterradführung, Schwinge
- 31: Endbereich
- 32: Aufnahme
- 33: Fußrasten
- 34: Querrohr
- 35: Aufnahme
- 36: Rahmenstreben
- 37: Rahmenstreben, Motorstreben
- 38: Verbindungsträger
- 39: Motorgetriebeeinheit
- 40: Befestigungspunkt
- 41: Kraftstofftank
- 42: Ölabscheideeinrichtung
- 43: Innenraum
- 44: Einlass
- 45: Auslass
- 46: Auslass
- 47: Ausnehmung
- 48: Sitzbank
- 49: Vorderrad
- 50: Hinterrad
- 51: Obere Federdämpferelementaufnahme
- 52: Federdämpferelement
- A: Pfeil, Längsrichtung
- B: Doppelpfeil, Breitenrichtung

## Patentansprüche

1. Motorradrahmen mit sich von einem Steuerkopfrohr (2) weg erstreckenden, in einem räumlichen Gitterverbund angeordneten Rohren mit Rahmenhauptrohren (4, 5) und diese verbindenden Rahmenstreben (17, 19, 25, 26, 27), wobei obere (4) und untere (5) Rahmenhauptrohre paarweise entlang wenigstens eines Teilbereichs ihrer Längserstreckung weitgehend parallel zueinander verlaufen, **dadurch gekennzeichnet, dass** zwischen den oberen Rahmenhauptrohren (4) und dem Steuerkopfrohr (2) ein einzelnes, weitgehend parallel zu den unteren Rahmenhauptrohren (5) verlaufendes Rohr (11) angeordnet ist.

2. Motorradrahmen nach Anspruch 1, **dadurch gekennzeichnet, dass** das Rohr (11) an einem dem Steuerkopfrohr (2) gegenüberliegenden Endbereich (16) offen und zur Aufnahme einer Einrichtung (42) zur Abscheidung von Öl aus einem Ölgasgemisch aus einer Motorgetriebeeinheit (39) ausgebildet ist.

3. Motorradrahmen nach Anspruch 2, **dadurch gekennzeichnet, dass** der Innenraum (43) des Rohrs (11) form- und flächenkomplementär zu der Einrichtung (42) ausgebildet ist und die Einrichtung (42) in dem Rohr (11) mittels eines Klemmsitzes lösbar festlegbar ist.

4. Motorradrahmen nach einem der vorstehenden Ansprüche, **dadurch gekennzeichnet, dass** eine Längsmittelachse (13) des Rohrs (11) mit einer Längsmittelachse (12) des Steuerkopfrohrs (2) einen Winkel von weitgehend 90 Grad einschließt.

5. Motorradrahmen nach einem der vorstehenden Ansprüche, **dadurch gekennzeichnet, dass** sich die unteren Rahmenhauptrohre (5) in einem Dreiecksverbund mit zwischen den Rahmenhauptrohren (5) angeordnetem Versteifungsblech (7) von dem Steuerkopfrohr (2) weg erstrecken und eine vom Dreiecksverbund aufgespannte Ebene die Längsmittelachse (12) des Steuerkopfrohrs (2) in einen Winkel von weitgehend 90 Grad schneidet.

6. Motorradrahmen nach einem der vorstehenden Ansprüche, **gekennzeichnet durch** Rahmenstreben (17), die sich von den unteren Rahmenhauptrohren (5) in Richtung der Anbindungsstelle (18) des Rohrs (11) am Steuerkopfrohr (2) erstrecken.

7. Motorradrahmen nach einem der vorstehenden Ansprüche, **dadurch gekennzeichnet, dass** die unteren Rahmenhauptrohre (5) entlang ihrer Längserstreckung vom Steuerkopfrohr (2) weg einen einen Öffnungswinkel (8) zwischen den unteren Rahmenhauptrohren (5) verkleinernden ersten Verengungsbereich (9) besitzen, ab dem die unteren Rahmenhauptrohre (5) mit in Längsrichtung größer werdendem Abstand zwischen den unteren Rahmenhauptrohren (5) in Richtung vom Steuerkopfrohr (2) weg bis zu einem zweiten Verengungsbereich (10) verlaufen, ab dem der Abstand zwischen den unteren Rahmenhauptrohren (5) in Längsrichtung vom Steuerkopfrohr (2) weg kleiner wird.

8. Motorradrahmen nach Anspruch 7, **gekennzeichnet durch** Rahmenstreben (19), die sich zwischen den unteren Rahmenhauptrohren (5) im Bereich des ersten Verengungsbereichs (9) und dem dem Steuerkopfrohr (2) gegenüberliegenden Bereich des Rohrs (11) erstrecken.

9. Motorradrahmen nach einem der vorstehenden Ansprüche, **gekennzeichnet durch** sich von den unteren Rahmenhauptrohren (5) in Richtung vom Rohr (11) weg und in Richtung zu einer die Längsmittelachse (12) des Steuerkopfrohrs (2) einschließenden Längsmittelebene (14) des Motorradrahmens (1) erstreckende Rahmenstreben (37).

10. Motorradrahmen nach einem der vorstehenden Ansprüche, **dadurch gekennzeichnet, dass** sich die oberen Rahmenhauptrohre (4) von dem dem Steuerkopfrohr (2) gegenüberliegenden Endbereich (16) des Rohrs (11) in Richtung vom Rohr (11) weg gerichtet und parallel zu den unteren Rahmenhauptrohren (5) erstrecken und ab einem Bereich einer jeweiligen oberen Abstützung (20) für einen Heckausleger (21) in Richtung zu den unteren Rahmenhauptrohren (5) nach unten gerichtet verlaufen.

11. Motorradrahmen nach einem der vorstehenden Ansprüche, **dadurch gekennzeichnet, dass** die unteren (5) und oberen Rahmenhauptrohre (4) im Bereich einer jeweiligen unteren Abstützung (22) für einen Heckausleger (21) jeweils eine Verbindungsstelle ausbilden.

12. Motorradrahmen nach einem der vorstehenden Ansprüche, **dadurch gekennzeichnet, dass** die oberen (4) und unteren (5) Rahmenhauptrohre mittels jeweils einer Rahmenstrebe (27) verbunden sind, die sich von einer jeweiligen oberen Abstützung (20) für einen Heckausleger (21) am jeweiligen oberen Rahmenhauptrohr (4) im schrägen Winkel nach unten gerichtet über das jeweilige untere Rahmenhauptrohr (5) hinaus erstreckt und eine Aufnahme (29) für ein Lager einer Hinterradführung (30) besitzt.

13. Motorradrahmen nach Anspruch 12, **dadurch gekennzeichnet, dass** die Rahmenstreben (27) am der oberen Abstützung (20) gegenüberliegenden Endbereich (31) mittels eines Querrohrs (34) verbunden sind, an dem eine Aufnahme (35) für eine Motorgetriebeeinheit (39) anbringbar ist.

14. Motorradrahmen nach Anspruch 13, **dadurch gekennzeichnet, dass** zwischen dem Querrohr (34) und den oberen Rahmenhauptrohren (4) im Bereich der unteren Abstützung (22) für den Heckausleger (21) jeweils eine Rahmenstrebe (36) angeordnet ist.

15. Motorradrahmen nach einem der vorstehenden Ansprüche, **gekennzeichnet durch** Rahmenstreben (19), die sich von den unteren Rahmenhauptrohren (5) zu den oberen Rahmenhauptrohren (4) im Bereich deren Anbindungsstelle (15) am Rohr (11) erstrecken.

16. Motorradrahmen nach einem der Ansprüche 12 bis 15, **gekennzeichnet durch** Rahmenstreben (25), die sich von den unteren Rahmenhauptrohren (5) zu den im schrägen Winkel verlaufenden Rahmenstreben (19) im Bereich deren Anbindungsstelle an den oberen Rahmenhauptrohren (4) erstrecken.

17. Motorradrahmen nach einem der vorstehenden Ansprüche, **dadurch gekennzeichnet, dass** das Rohr (11) im Querschnitt eine polygonale Konfiguration, insbesondere eine Innenumfangsfläche mit acht Einzelflächen aufweist.

18. Motorradrahmen nach einem der vorstehenden Ansprüche, **dadurch gekennzeichnet, dass** der Motorradrahmen (1) frei ist von eine Motorgetriebeeinheit (39) vollständig einschließenden Rahmenhauptrohren und/oder Rahmenstreben.

19. Motorrad mit einem Vorderrad (49) und einem Hinterrad (50) sowie einer Motorgetriebeeinheit (39), **gekennzeichnet durch** einem Motorradrahmen (1) nach einem der vorstehenden Ansprüche.

20. Motorrad nach Anspruch 19, **gekennzeichnet durch** einen zwischen einem Steuerkopfrohr (2) des Motorradrahmens (1) und einer am Motorradrahmen (1) abgestützten Sitzfläche (48) angeordneten Kraftstofftank (41), dessen Unterseite eine Ausnehmung (47) besitzt, die ein sich vom Steuerkopfrohr (2) weg erstreckendes und mit oberen Rahmenhauptrohren (4) verbundenes einzelnes Rohr (11) zumindest weitgehend einschließt.

## Claims

1. A motorcycle frame with tubes, arranged in a spatial lattice structure, extending away from a steering head tube (2), with main frame tubes (4, 5) and frame struts (17, 19, 25, 26, 27) linking these, wherein upper (4) and lower (5) main frame tubes run in pairs substantially parallel to one another along at least part of their longitudinal extent, **characterised in that** a single tube (11) is arranged between the upper main frame tubes (4) and the steering head tube (2), running substantially parallel to the lower main frame tubes (5).

2. The motor bicycle frame according to Claim 1, **characterised in that** at an end region (16) opposite to the steering head tube (2) the tube (11) is designed to be open and for the accommodation of a device (42) for the separation of oil from an oil-gas mixture from an engine gearbox unit (39).

3. The motor bicycle frame according to Claim 2, **characterised in that** the interior (43) of the tube (11) is designed to be complementary in terms of shape and surfaces to the device (42), and **in that** the device (42) can be held in the tube (11) by means of a press fit, such that it can be released.

4. The motor bicycle frame according to one of the preceding claims, **characterised in that** a longitudinal central axis (13) of the tube (11) subtends an angle of substantially 90 degrees with a longitudinal central axis (12) of the steering head tube (2).

5. The motor bicycle frame according to one of the preceding claims, **characterised in that** the lower main frame tubes (5) extend away from the steering head tube (2) in a triangular structure with a stiffening plate (7) arranged between the main frame tubes (5) and **in that** a plane defined by the triangular structure cuts the longitudinal central axis (12) of the steering head tube (2) at an angle of substantially 90 degrees.

6. The motor bicycle frame according to one of the preceding claims, **characterised by** frame struts (17), which extend from the lower main frame tubes (5) in the direction of the location (18) at which the tube (11) connects with the steering head tube (2).

7. The motor bicycle frame according to one of the preceding claims, **characterised in that** the lower main frame tubes (5) along their longitudinal extent away from the steering head tube (2) possess a first narrowing region (9), reducing the included angle (8) between the lower main frame tubes (5), from which point the lower main frame tubes (5) run in the direction away from the steering head tube (2) as far as a second narrowing region (10), the separation between the lower main frame tubes (5) becoming larger in the longitudinal direction, from which point the separation between the lower main frame tubes (5) in the longitudinal direction away from the steering head tube (2) becomes smaller.

8. The motor bicycle frame according to Claim 7, **characterised by** frame struts (19), which extend between the lower main frame tubes (5) in the region of the first narrowing region (9) and the region of the tube (11) opposite to the steering head tube (2).

9. The motor bicycle frame according to one of the preceding claims, **characterised by** frame tubes (37) extending from the lower main frame tubes (5) in a direction away from the tube (11), and in a direction towards a longitudinal central plane (14) of the motor bicycle frame (1) incorporating the longitudinal central axis (12) of the steering head tube (2).

10. The motor bicycle frame according to one of the preceding claims, **characterised in that** the upper main frame tubes (4) extend from the end region (16) of the tube (11) opposite to the steering head tube (2) in a direction directed away from the tube (11) and parallel to the lower main frame tubes (5), and **in that** they run from a region of a respective upper support (20) for a rear cantilever arm (21) in a downwards direction directed towards the lower main frame tubes (5).

11. The motor bicycle frame according to one of the preceding claims, **characterised in that** the lower (5) and upper (4) main frame tubes in each case form a connecting location in the region of a respective lower support (22) for a rear cantilever arm (21).

12. The motor bicycle frame according to one of the preceding claims, **characterised in that** the upper (4) and lower (5) main frame tubes are in each case connected by means of a frame strut (27), which extends from a respective upper support (20) for a rear cantilever arm (21) on the respective upper main frame tube (4) at an inclined angle directed downwards beyond the respective lower main frame tube (5) and possesses a seating (29) for a bearing of a rear wheel suspension (30).

13. The motor bicycle frame according to Claim 12, **characterised in that** the frame struts (27) at the end region (31) opposite to the upper support (20) are connected by means of a cross tube (34) to which a seating (35) for an engine gearbox unit (39) can be attached.

14. The motor bicycle frame according to Claim 13, **characterised in that** between the cross tube (34) and the upper main frame tubes (4) a frame strut (36) is in each case arranged in the region of the lower support (22) for the rear cantilever arm (21).

15. The motor bicycle frame according to one of the preceding claims, **characterised by** frame struts (19), which extend from the lower main frame tubes (5) to the upper main frame tubes (4) in the region of the location (15) at which they connect to the tube (11).

16. The motor bicycle frame according to one of the Claims 12 to 15, **characterised by** frame struts (25), which extend from the lower main frame tubes (5) to the frame struts (19) running at an inclined angle in the region of the location at which they connect to the upper main frame tubes (4).

17. The motor bicycle frame according to one of the preceding claims, **characterised in that** the tube (11) in cross-section has a polygonal configuration, in particular, an internal periphery with eight individual surfaces.

18. The motor bicycle frame according to one of the preceding claims, **characterised in that** the motor bicycle frame (1) is free from main frame tubes and/or frame struts completely enclosing an engine gearbox unit (39).

19. A motor bicycle with a front wheel (49) and a rear wheel (50), as well as an engine gearbox unit (39), **characterised by** a motor bicycle frame (1) according to one of the preceding claims.

20. The motor bicycle according to Claim 19, **characterised by** a fuel tank (41) arranged between a steering head tube (2) of the motor bicycle frame (1) and a seating surface (48) supported on the motor bicycle frame (1), the underside of which possesses a cut-out (47), which encloses at least substantially a single tube (11) extending away from the steering head tube (2) and connected to the upper main frame tubes (4).

## Revendications

1. Cadre de motocyclette, comprenant des tubes, qui s'étendent en éloignement d'un tube de tête de direction (2) qui sont agencés en un assemblage grillagé dans l'espace, avec des tubes principaux de cadre (4, 5), et des entretoises locales qui les relient (17, 19, 25, 26, 27), de sorte que des tubes principaux de cadre supérieurs (4) et inférieurs (5) s'étendent largement parallèlement les uns aux autres par paires le long d'au moins une zone partielle de leur extension longitudinale,
**caractérisé en ce qu'**un tube unique (11), s'étendant largement parallèlement aux tubes principaux de cadre inférieurs (5), est agencé entre des tubes principaux de cadre supérieurs (4) et le tube de tête de direction (2).

2. Cadre de motocyclette selon la revendication 1, **caractérisé** entre le tube (11) est ouvert à une région terminale (16) à l'opposé du tube de tête de direction (2), et est réalisé pour recevoir un système (42) pour la séparation de l'huile hors d'un mélange huile/gaz provenant d'une unité d'entraînement à moteur (39).

3. Cadre de motocyclette selon la revendication 2, **caractérisé en ce que** le volume intérieur (43) du tube (11) est réalisé avec complémentarité de formes et de surfaces vis-à-vis du système (42), et le système est susceptible d'être immobilisé de façon détachable dans le tube (11) au moyen d'un montage serré.

4. Cadre de motocyclette selon l'une des revendications précédentes, **caractérisé en ce que** l'axe médian longitudinal (16) du tube (11) définit avec l'axe médian longitudinal (12) du tube de tête de direction (2) un angle sensiblement égal à 90°.

5. Cadre de motocyclette selon l'une des revendications précédentes, **caractérisé en ce que** les tubes principaux de cadre inférieurs (5) s'étend en formant un assemblage triangulaire avec une tôle de renforcement (7) agencée entre les tubes de cadres principaux (5) en s'éloignant du tube de tête de direction (2), et un plan couvert par l'assemblage triangulaire recoupe l'axe médian longitudinal (12) du tube de tête de direction (2) sous un angle sensiblement égal à 90°.

6. Cadre de motocyclette selon l'une des revendications excellentes, **caractérisé par** des entretoises de cadre (17) qui s'étendent depuis les tubes principaux de cadre inférieurs (5) en direction de l'emplacement de jonction (18) du tube (11) sur le tube de tête de direction (2).

7. Cadre de motocyclette selon l'une des revendications précédentes, **caractérisé en ce que** les tubes principaux de cadre inférieurs (5) possèdent, le long de leur extension longitudinale en éloignement du tube de tête de direction (2), une première zone en rétrécissement (9) qui rétrécit un angle d'ouverture (8) entre les tubes principaux de cadre inférieur, à partir de laquelle les tubes principaux de cadre inférieur (5) s'étendent, en s'éloignant du tube de tête de direction (2), alors que la distance augmente en direction longitudinale entre les tubes principaux de cadre inférieurs (5), jusqu'à une seconde zone en rétrécissement (10), à partir de laquelle la distance entre les tubes principaux de cadre inférieurs (5) devient plus petite alors qu'on s'éloigne en direction longitudinale du tube de tête de direction (2).

8. Cadre de motocyclette selon la revendication 7, **caractérisé par** des entretoises de cadre (19) qui s'étendent entre les tubes principaux de cadre inférieur (5) dans la région de la première zone en rétrécissement (9) et la zone du tube (11) opposée au tube de tête de direction (2).

9. Cadre de motocyclette selon l'une des revendications précédentes, **caractérisé par** des entretoises de cadre (37) qui s'étendent en éloignement du tube (11) et en direction d'un plan médian longitudinal (14) du cadre de motocyclette (1) qui inclut l'axe médian longitudinal (12) du tube de tête de direction.

10. Cadre de motocyclette selon l'une des revendications précédentes, **caractérisé en ce que** les tubes principaux de cadre supérieurs (4) s'étendent, depuis la zone terminale (16) du tube (11) opposée au tube de tête de direction (2) en éloignement du tube (11) et parallèlement aux tubes principaux de cadre inférieurs (5), et à partir d'une région d'un soutien supérieur respectif (20) pour un bras arrière (21), ils s'étendent en orientation vers le bas en direction des tubes principaux de cadre inférieurs (5).

11. Cadre de motocyclette selon l'une des revendications précédentes, **caractérisé en ce que** les tubes principaux de cadre supérieurs (5) et les tubes principaux de cadre supérieur (4) réalisent respectivement un point de liaison dans la zone d'un soutien inférieur respectif (22) pour un bras arrière (21).

12. Cadre de motocyclette selon l'une des revendications précédentes, **caractérisé en ce que** les tubes principaux de cadre supérieurs (4) et les tubes principaux de cadre inférieurs (5) sont reliés au moyen d'une entretoise de cadre respective (27), laquelle s'étend depuis un soutien supérieur respectif (20) pour un bras arrière (21) sur le tube principal de cadre supérieur respectif (4) en orientation vers le bas sous un angle oblique, au-delà du tube principal de cadre supérieur respectif, et possède un logement (29) pour un palier d'une suspension de roue arrière (30).

13. Cadre de motocyclette selon la revendication 12, **caractérisé en ce que** les entretoises de cadre (27) sont reliées à la zone terminale (31) opposée au soutien supérieur (20) au moyen d'un tube transversal sur lequel peut être monté un logement (35) pour une unité d'entraînement à moteur (39).

14. Cadre de motocyclette selon la revendication 13, **caractérisé en ce qu'**une entretoise de cadre respective (36) est agencée entre le tube transversal (34) et les tubes principaux de cadre supérieurs (4) dans la région du soutien inférieur (22) pour le bras arrière (21).

15. Cadre de motocyclette selon l'une des revendications précédentes, **caractérisé par** des entretoises de cadre (19) qui s'étendent depuis les tubes principaux de cadre inférieurs (5) jusqu'aux tubes principaux de cadre supérieurs (4) dans la région de leur point de liaison (15) sur le tube (11).

16. Cadre de motocyclette selon l'une des revendications 12 à 15, **caractérisé par** des entretoises de cadre (25) qui s'étendent depuis les tubes principaux de cadre inférieurs (5) vers les entretoises de cadre (19), qui s'étendent sous un angle oblique, dans la région de leur point de liaison aux tubes principaux de cadre supérieurs (4).

17. Cadre de motocyclette selon l'une des revendications précédentes, **caractérisé en ce que** le tube (11) possède une configuration polygonale en section transversale, en particulier une surface périphérique intérieure avec huit faces individuelles.

18. Cadre de motocyclette selon l'une des revendications précédentes, **caractérisé en ce que** le cadre de motocyclette (1) est dépourvu de tubes principaux de cadre et/ou d'entretoises de cadre qui enferment totalement une unité d'entraînement à moteur (39).

19. Motocyclette comprenant une roue avant (49) et une roue arrière (50) ainsi qu'une unité d'entraînement à moteur (39), **caractérisée par** un cadre de motocyclette (1) selon l'une des revendications précédentes.

20. Motocyclette selon la revendication 19, **caractérisée par** un réservoir de carburant (41), agencé entre un tube de tête de direction (2) du cadre de motocyclette (1) et une surface d'assise (48) soutenue sur le cadre de motocyclette (1), dont la face inférieure possède un évidement (47) qui inclut au moins largement un tube individuel (11) qui s'étend en éloignement du tube de tête de direction (2) et qui est relié aux tubes principaux de cadre supérieurs (4).
